# EUROPÄISCHE PATENTSCHRIFT

(11) **EP 0 810 392 B1**
(45) Veröffentlichungstag und Bekanntmachung des Hinweises auf die Patenterteilung: **12.02.2003**
(21) Anmeldenummer: 97107425.7
(22) Anmeldetag: 06.05.1997
(51) Int. Cl.: F16H 59/02

(54) **Steuereinrichtung**
Control device
Dispositif de commande

(30) Priorität: 28.05.1996 DE 19621392
(43) Veröffentlichungstag der Anmeldung: 03.12.1997
(73) Patentinhaber: SAME DEUTZ-FAHR GROUP S.p.A., 24047 Treviglio (Bergamo) (IT)
(72) Erfinder: Hülsebusch, Joachim, 51063 Köln (DE)
(74) Vertreter: Quinterno, Giuseppe

(56) Entgegenhaltungen:
- DE-A- 3 100 504
- DE-A- 3 116 833
- US-A- 2 964 964
- US-A- 4 912 997
- PATENT ABSTRACTS OF JAPAN vol. 018, no. 348 (M-1630), 30. Juni 1994 & JP 06 087343 A (JIDOSHA KIKI CO LTD), 29. März 1994 & JP 06 087343 A (JIDOSHA KIKI) 29. März 1994

## Beschreibung

Die Erfindung betrifft eine Steuereinrichtung, insbesondere für land- oder bauwirtschaftliche Fahrzeuge, nach dem Oberbegriff des Patentanspruches 1.

Solche Steuereinrichtungen mit einem Stellhebel sind beispielsweise aus dem Kraftfahrzeugbereich bekannt (US-A-4,912,997 und DE-A-31 00 504), wobei mittels des Stellhebels eine Gang- oder Fahrstufenauswahl eines Getriebes getroffen werden kann, wozu der Stellhebel in zumindest einer Achse zwischen Positionen in einer Kulisse bewegbar ist. Diese Steuereinrichtungen sind aber kompliziert im Aufbau.

Der Erfindung liegt daher die Aufgabe zugrunde, eine Steuereinrichtung der eingangs genannten Art bereit zu stellen, die einfacher herzustellen und zusammen zu bauen ist.

Diese Aufgabe wird erfindungsgemäß mit einer Steuereinrichtung gelöst, die die Merkmale des Anspruchs 1 aufweist.

Eine derartige Steuereinrichtung hat die Vorteile, dass die Montage der Schwinge einfach, schnell und damit kostengünstig vorgenommen werden kann, wobei dann, wenn die Kulisse verschmutzt oder verschlissen sein sollte oder gegen eine Kulisse mit einer anderen geometrischen Gestaltung ausgetauscht werden soll, die Reinigung beziehungsweise der Austausch durch einfache Demontage der Schwinge vorgenommen werden kann. Dieser Vorteil ergibt sich auch aus dem Einstecken des Stellhebels.

Ebenso ist es von Vorteil, dass eine Anpassung an die anwendungsspezifischen Steuerungsaufgaben leicht möglich ist, unabhängig von der Steuerungsart (zum Beispiel mechanisch über Bowdenzüge oder Gestänge, elektromechanisch über Magnetventile in einem Öldruckkreislauf oder elektrisch über Schalter in einem Stromkreis, wobei auch Kombinationen davon denkbar sind) die Steuerung der gewünschten Funktion(en) durchführbar ist sowie eine einfache, schnelle und zielsichere Einstellung der gewünschten Funktion gegeben ist.

Weitere vorteilhafte Ausgestaltungen der erfindungsgemässen Steuereinrichtung sind in den Unteransprüchen angegeben, wobei zumindest ein Vorteil darin liegt, dass eine Bewegung des Stellhebels in eine Richtung (beispielsweise eine Hauptachse) umgesetzt wird in eine Stellbewegng (zum Beispiel eines Stellgestänges) in eine quer zu der Hauptachse liegende Achse. Dadurch ist es möglich, bei Bewegungen des Stellhebels in Längs- und Querrichtung die Stellgestänge oder dergleichen parallel zueinander und in die gleiche oder entgegengesetzte Richtung wirkend anzuordnen.

Ein weiterer Vorteil liegt darin, dass mittels der Verschiebehülse, die an dem Stellhebel auf- und abbewegbar und ggfs. drehbar ist, der Stellhebel einfach festsetzbar oder in einem vorgebbaren, von der Kulisse begrenzten Bereich frei bewegbar ist.

Weitere Ausgestaltungen sowie ein Ausführungsbeispiel der erfindungsgemässen Steuereinrichtung sind im folgenden beschrieben und anhand der Zeichnungen erläutert.

**Figuren**
- Figur 1:: einen Stellhebel
- Figur 2:: einen Längsschnitt durch die Einstelleinrichtung,
- Figur 2a:: die Ausführung einer Kulisse,
- Figur 3:: einen Querschnitt durch die Einstelleinrichtung,
- Figur 4:: eine Draufsicht auf die Einstelleinrichtung,
- Figur 5:: einen eingesteckten Stellhebel,
- Figur 6:: die Lagerung des Stellhebels beziehungsweise der Schwinge.

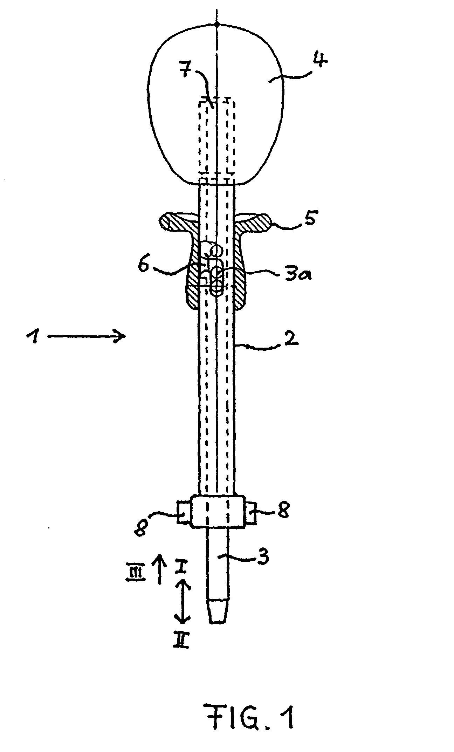

Figur 1 zeigt einen Stellhebel, mit dem die erfindungsgemäße Steuereinrichtung bedienbar ist, wobei die Lagerung des Stellhebels um die Lagerzapfen 8 nicht Gegenstand der Erfindung ist. Ein mit der Bezugsziffer 1 bezeichneter Stellhebel besteht im wesentlichen aus einem Führungsrohr 2, in dem längsverschiebbar eine Stange 3 angeordnet und gelagert ist. An dem einer Bedienperson zugeordneten Ende weist der Stellhebel 1 einen Knauf 4 auf, unterhalb dessen koaxial um das Führungsrohr 2 herum eine verschiebbare Verstellhülse 5 angeordnet ist. Über eine Ausnehmung 6 in dem Führungsrohr 2, die in etwa S-förmig sich in dem Führungsrohr 2 befindet, steht die Verstellhülse 5 mit der Stange 3 mittels eines radial ausgerichteten Stiftes 3a in Verbindung, so daß durch Ziehen beziehungsweise Loslassen der Verstellhülse 5, bei gleichzeitiger Abstützung der Hand der Bedienperson an dem Knauf 4, eine Längsverschiebung der Stange 3 bzw. des Stiftes 3a in der Ausnehmung 6 in die beiden Richtungen, die mit I und II bezeichnet sind, möglich ist. Die Längsverschiebung der Stange 3 erfolgt gegen eine Vorspannung, die gemäß Figur 1 durch eine in dem Knauf 4 angeordnete Druckfeder 7 realisiert ist. Somit kann zum einen durch Ziehen der Verstellhülse 5 in Richtung des Knaufes 4 die Stange 3 in Richtung I längs verschoben werden. Weiterhin ist darüberhinaus eine weitere Verschiebung der Stange 3 in Richtung des Knaufes 4 möglich, die mit III eingezeichnet ist. Zu diesem Zweck wird nach einer Bewegung der Stange 3 in Richtung I die Verstellhülse 5 beispielsweise in etwa um 90° in dem Führungsrohr 2 gedreht, wobei die Verbindung zwischen Stange 3 und Verstellhülse 5 dann in eine Ausnehmung in dem Führungsrohr 2 gelangt, die eine weitere Verschiebung der Stange 3 in Richtung III gestattet. Je nach Ausgestaltung der Ausnehmung in dem Führungsrohr 2 ist es möglich, die Stange 3 in den einzelnen Positionen zu arretieren oder aufgrund der Vorspannung in ihre Ausgangsposition zurück bewegen zu lassen. Eine konstruktiv einfacherere und damit kostengünstigere Lösung zur Längsverschiebung und Arretierung der Verstellhülsen 5 ist darin zu sehen, daß auf der Oberfläche des Führungsrohres 2 ein oder mehrere Nuten angeordnet sind, in die ein Teil der Verstellhülse 5 eingreifen kann.

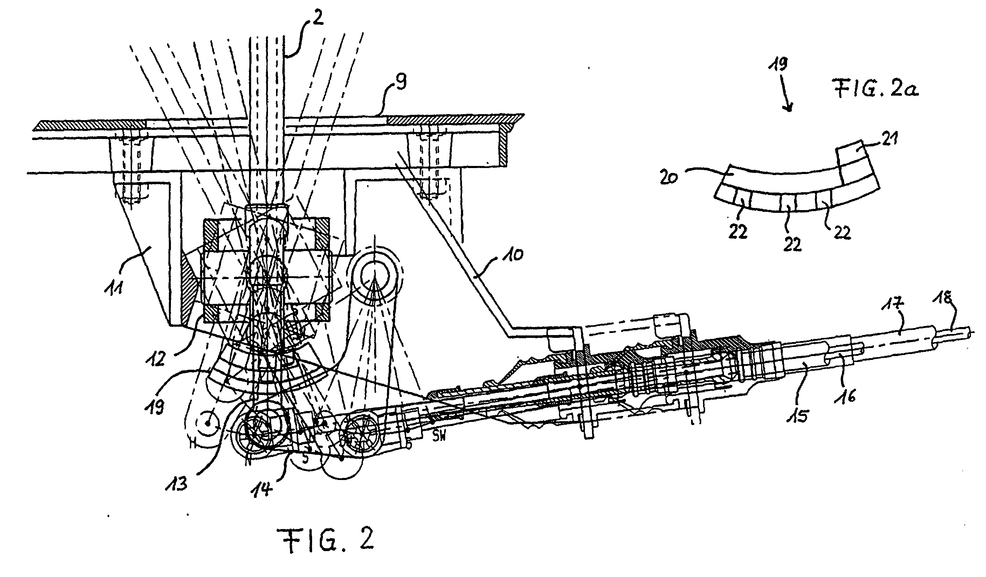

Figur 2 zeigt einen Längsschnitt durch die erfindungsgemäße Steuereinrichtung, die in einer Konsole 9 eines Fahrzeuges, beispielsweise in Griffweite neben der Bedienperson des Fahrzeuges, angeordnet ist. Unterhalb der Konsole 9 beziehungsweise als Bestandteil davon sind Trägerelemente 10 und 11 angeordnet, die einstückig oder geteilt voneinander an der Konsole 9, beispielsweise mittels einer Schraubverbindung, angeordnet sind. Die Trägerelemente 11 nehmen eine Schwinge 12 auf, die in ihrem Querschnitt in etwa U-förmig ausgebildet ist und an ihren Schenkeln Lagerzapfen, ähnlich den Lagerzapfen 8 des Stellhebels 1,aufweist. Damit ist die Schwinge 12 in einer Ebene mittels des Stellhebels 1 auslenkbar. In der Schwinge 12 selber ist eine weitere Lagerung angeordnet, die den Stellhebel 1 aufnimmt und eine Auslenkung des Stellhebels 1 in eine Querebene gestattet. Aufgrund dieser kardanischen Lagerung und Aufhängung des Stellhebels 1 können mit diesen Auslenkungen in eine Ebene und in eine Querebene sowie in Kombinationen davon ausgeführt werden. An dem Stellhebel 1 sind Übertragungselemente 13 angeordnet, während an der Schwinge 12 weitere Übertragungselemente 14 angeordnet sind. Die Übertragungselemente 13 sind bei einer Auslenkung des Stellhebels 1 nach rechts oder links (bei Betrachtung der Figur 2) derart ausgestaltet, daß deren Bewegung auf eine in einem Bowdenzug 15 angeordnete Sehne übertragen wird, so daß die Sehne 16 ebenfalls eine Bewegung bei Betrachtung der Figur 2 nach rechts oder links ausführt. Die Übertragungselemente 14 sind derart gestaltet, daß bei einer Auslenkung des Stellhebels 1 aus der Figur 2 heraus oder in diese hinein eine weitere in einem weiteren Bowdenzug 17 angeordnete Sehne eine quer zu der Auslenkung gerichtete Bewegung, also in die gleiche Richtung oder entgegengesetzt dazu wie zu der Sehne 16, ausführt.

Weiterhin ist in Figur 2 gezeigt, daß unterhalb der Schwinge 12, also im Endbereich der Stange 3, eine Kulisse 19 angeordnet, wobei der Stellhebel 1 beziehungsweise die Stange 3 in Abhängigkeit von der Kulisse 19 auslenkbar und/oder festsetzbar ist. Bei der in Figur 2a beispielhaft gezeigten Kulisse 19 ist wenigestens eine Führungsebene 20 vorhanden, die um eine weitere Ebene 21 ergänzt ist, wobei die Ebenen 20 und/oder 21 zumindest als Längsführung (ggfs. auch als Querführung oder als Fläche) ausgestaltet sind. Weiterhin sind unterhalb der Führungsebene 20 Bohrungen 22 vorhanden, wobei die Wirkungsweise der Kulisse 19 die folgende ist:

Es ist zunächst angenommen, daß die Stange 3 sich in einer derartigen Position befindet, daß deren Ende sich auf der Führungsebene 20 befindet und längs dieser Ebene 20 entlang gleiten kann. Damit ist eine stufenlose Auslenkung des Stellhebels 1 möglich. Wird eine Festsetzung (Arretierung) gewünscht, ist die Stange 3 durch Längsverschiebung mittels entsprechender Längsverschiebung der Verstellhülse 5 und/oder einer entsprechenden Verdrehung der Verstellhülse 5 in Richtung II längs verschiebbar, so daß das Ende der Stand 3 in eine der Bohrungen 22 eingreift und somit der Stellhebel 1 arretiert ist. Damit kann beispielsweise eine dauerhafte Funktion ein- oder ausgeschaltet werden. Wird eine Funktion gewünscht, die nur ausnahmsweise ein- oder ausgeschaltet werden soll oder die eine erhöhte Aufmerksamkeit benötigt, ist es durch entsprechende Längsverschiebung der Stange 3 in Richtung III möglich, von der Führungsebene 20 auf die Ebene 21 zu gelangen, wobei es alternativ auch denkbar ist, daß in der Führungsebene 20 ein Anschlag vorhanden ist, der zur Einstellung einer weiteren Funktion überwunden werden muß. Figur 2a zeigt eine längsführende Ausgestaltung der Kulisse 19, wobei auch dreidimensionale Ausgestaltungen denkbar sind, die eine kennfeldartige Einstellung einer Funktion oder von Funktionen gewährleistet. In vorteilhafter Weise ist die Kulisse 19 beziehungsweise eine flächenartige Kulisse 19 kreisbogen-oder kissenförmig ausgestaltet, um durch diese Ausgestaltung die Schwenkbewegung des Stellhebels 1 nachzuvollziehen. Eine konstruktiv einfacherere Ausgestaltung besteht in einer gradlinigen oder flächenartigen Ausgestaltung.

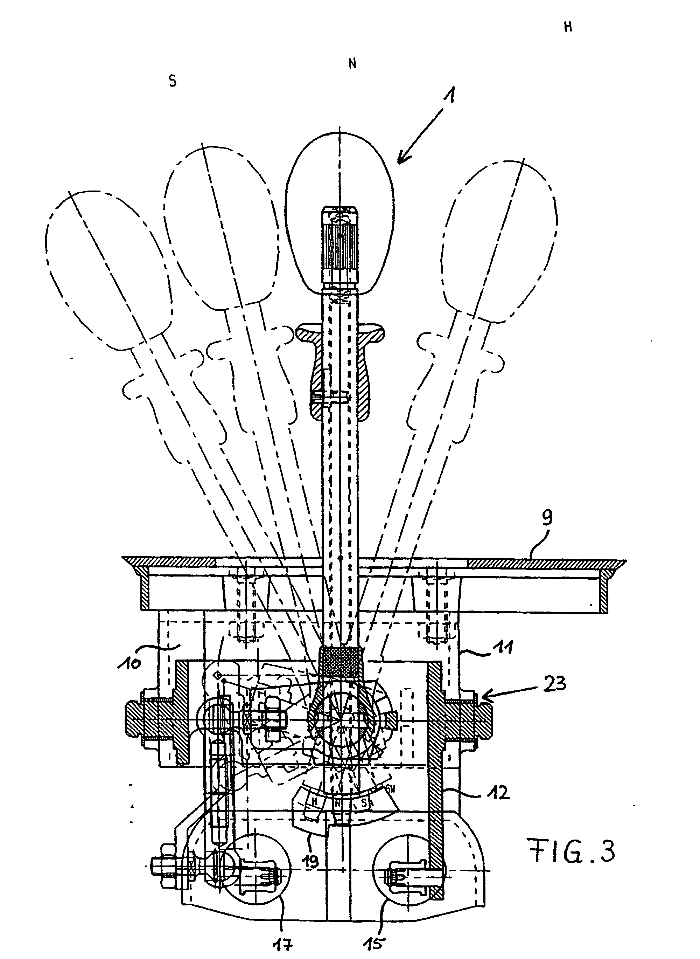

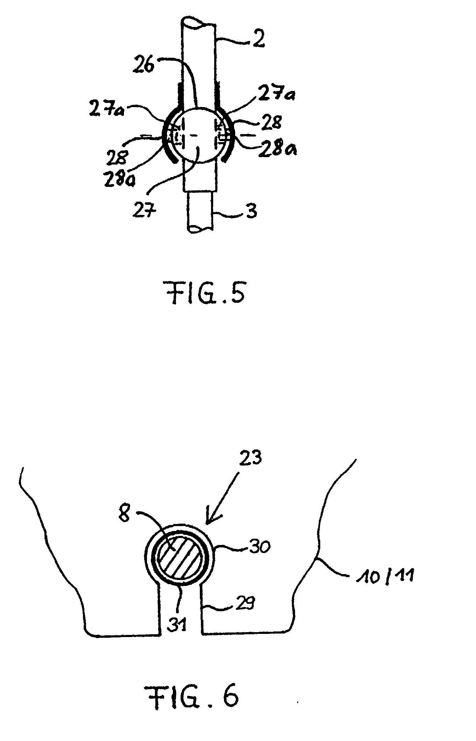

Figur 3 zeigt als Ergänzung einen Querschnitt durch die erfindungsgemäße Steuereinrichtung, wobei hierbei die Realisierung der Übertragungselemente 14 mittels Gelenkstangen und Kugelköpfen sichtbar ist. Weiterhin ist erkennbar, daß die Schwinge 12 in einer Lagerung 23 angeordnet ist, deren Aufbau in Figur 6 noch gezeigt und beschrieben ist.

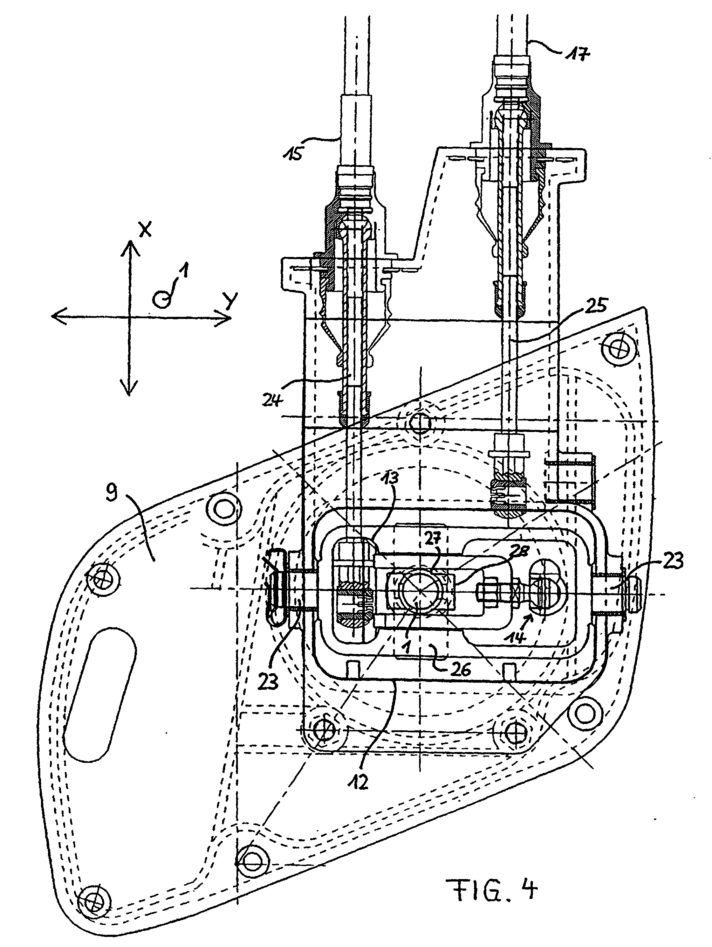

Figur 4 zeigt eine Draufsicht auf die erfindungsgemäße Einstelleinrichtung, wobei gezeigt ist, daß in der Konsole 9 ein Stellhebel 1 angeordnet ist, der sowohl in X- als auch Y-Richtung als auch in eine beliebige Kombination dieser beiden Richtungen verstellbar ist Die Auslenkung des Stellhebels 1 wird dabei jeweils in die gleiche Richtung (bei Betrachtung der Figur 4 nach oben beziehungsweise nach unten) übertragen. In Figur 4 ist noch ergänzend gezeigt, daß den Übertragungselementen 13 und 14 zunächst Schubstangen 24 und 25 nachgeordnet sind, denen sich die Bowdenzüge 15 und 17 anschließen. Denkbar ist auch der Einsatz nur von Bowdenzügen oder nur von Schubstangen. Weiterhin ist in Figur 4 gezeigt, daß innerhalb der Schwinge 12 ein Bolzen 26 angeordnet ist, durch den der Stellhebel 1 geführt ist. Der Bolzen 26 ist drehbar gelagert in der Schwinge 12 und gestattet somit (bei Betrachtung der Figur 4) eine Auslenkung des Stellhebels 1 nach rechts beziehungsweise nach links. Um die Lagerung 23 ist durch entsprechende Auslenkung des Stellhebels 1 die Schwinge 12 bei Betrachtung der Figur 4 nach oben beziehungsweise unten auslenkbar.

Figur 5 zeigt einen eingesteckten Stellhebel, mit dem eine einfache Montage möglich ist. Zu diesem Zweck weist der Bolzen 26 die Bohrung 27 auf, die einen geringfügig größeren Durchmesser oder annähernd gleichen Durchmesser aufweist, wie das Führungsrohr 2. Weiterhin hat er noch senkrecht dazu entweder eine Bohrung 27a oder bei dickeren Bolzen zwei Sackbohrungen. An dem Führungsrohr 2 befinden sich Klauen 28, die beispielsweise als Kunststoffspritzteil ausgestaltet sind und durch Aufkleben oder Aufpressen fest mit dem Führungsrohr 2 verbunden sind. Die Klauen haben auf ihren Innenseiten zwei Vorsprünge 28a, die der Bohrung 27a zugeordnet sind. Nach erfolgter Montage der Steuereinrichtung, bis auf den Stellhebel 1, wird dieser Stellhebel 1 von oben (gemäß Figur 2) durch die Bohrung 27 gesteckt, wobei dann die Klauen 28 von dem Bolzen 26 zunächst auseinandergedrückt werden und anschließend den Bolzen 26 umschließen und die Vorsprünge 28a in die Bohrung 27a einrasten, wobei durch diesen Form-und Kraftschluß der Stellhebel 1 festgesetzt ist.

Figur 6 zeigt eine Lagerung der Schwinge 12, wobei in dem Trägerelement 10 beziehungsweise 11 der Konsole 9 ein Längsschlitz 29 mit einer sich anschließenden gegenüber dem Lagerzapfen 8 durchmessergrößeren Bohrung 30 vorgesehen ist. Durch den Längsschlitz 29 kann, bei einer zweidimensionalen Auslenkung des Stellhebels 1 die Lagerzapfen 8 der Schwinge 12, eingeschoben werden, bis sich die Lagerzapfen 8 im wesentlichen im Bereich der Bohrung 30 befinden. Anschließend wird über die Lagerzapfen 30 eine Hülse 31 aufgeschoben, die einen Innendurchmesser hat, der geringfügig größer ist als der Durchmesser der Lagerzapfen 8 und einen Außendurchmesser aufweist, der geringfügig kleiner ist als der Durchmesser der Bohrung 30. Durch diese Hülse 31 wird der Lagerzapfen 8 festgesetzt und gleichzeitig gelagert, wobei auch eine Schmierung in diesem Bereich erfolgen kann. Ebenso ist es denkbar, die Hülse 31 aus einem Material herzustellen, das Schmiereigenschaften hat (beispielsweise Kunststoff). Ebenso ist es denkbar, daß es sich bei der Hülse 31 um ein Kugellager oder ähnliches handelt. Zur Festsetzung der Hülse 31 weist der Lagerzapfen in seinem Endbereich eine umlaufende Nut auf, die einen Federring aufnimmt. Denkbar ist auch die Festsetzung der Hülse 3 mittels eines Stiftes oder Splintes, der senkrecht durch den Lagerzapfen 8 geführt wird. Denkbar ist auch, daß an der Hülse 31 ein Kragen angeordnet ist, der an den Trägerelementen 10 beziehungsweise 11 anliegt.

Mittels des Stellhebels 1 kann dann wenigstens eine Funktion oder auch mehrere Funktionen manuell gesteuert, ausgelöst, verändert beziehungsweise festgesetzt werden.

## Patentansprüche

1. Steuereinrichtung, insbesondere für land- oder bauwirtschaftliche Fahrzeuge, mit einem einen Knauf (4) aufweisenden Stellhebel (1), der in einem Gehäuse, einer Konsole (9) oder dergleichen in zumindest eine Richtung auslenkbar angeordnet ist und mittels einer Kulisse (19) geführt ist, wobei dem dem Knauf (4) entgegengesetzten Ende des Stellhebels (1) die Kulisse (19) zugeordnet ist, und die Kulisse (19) zumindest eine Führungs- und eine Arretierebene aufweist, die unterschiedliche Abstände zum Schwenkpunkt des Stellhebels (1) aufweisen, wobei der Stellhebel (1) in Abhängigkeit von der Kulisse (19) auslenkbar und/oder festsetzbar ist und der Stellhebel (1) in ein Lager in einer in der Konsole (9) gelagerten, quer zur Schwenkrichtung des Stellhebels (1) schwenkbaren Schwinge (12) einsteckbar ist, **dadurch gekennzeichnet, dass** die Schwinge (12) einen quer zu ihrer Verschwenkrichtung drehbar angeordneten Bolzen (26) mit einer den Stellhebel (1) aufnehmenden Bohrung (27) aufweist, und der Stellhebel (1) im Bereich des Schwenkpunktes Klauen (28) aufweist, wobei die Klauen (28) bei in die Bohrung (27) eingestecktem Stellhebel (1) den Bolzen (26) zumindest teilweise umgreifen.

2. Steuereinrichtung nach Anspruch 1, **dadurch gekennzeichnet, dass** der in einer Richtung X schwenkbare Stellhebel (1) in der Schwinge (12) quer zu dieser Richtung X in einer Richtung Y schwenkbar ist.

3. Steuereinrichtung nach einem der vorhergehenden Ansprüche, **dadurch gekennzeichnet, dass** die Lagerung (23) der Schwinge (12) Lagerzapfen (8) aufweist, wobei in einem Trägerelement (10, 11) der Konsole (9) Längsschlitze (29) mit einer sich anschliessenden gegenüber den Lagerzapfen (8) durchmessergrösseren Bohrung (30) vorgesehen und auf den Lagerzapfen (8) Hülsen (31) aufschiebbar sind.

4. Steuereinrichtung nach Anspruch 3, **dadurch gekennzeichnet, dass** die Hülse (31) mittels eines Federringes oder eines Stiftes oder Splintes oder dergleichen gesichert ist.

5. Steuereinrichtung nach einem der vorhergehenden Ansprüche, **dadurch gekennzeichnet, dass** dem Stellhebel (1) und/oder der Schwinge (12) Übertragungselemente (13, 14) zugeordnet sind, die eine Auslenkung in eine Bewegung in Richtung der Auslenkung und/oder quer zu der Auslenkung übertragen.

6. Steuereinrichtung nach Anspruch 5, **dadurch gekennzeichnet, dass** die Übertragungselemente (13, 14) die Auslenkung auf Bowdenzüge (15, 17), Schubstangen (24, 25) oder dergleichen übertragen.

7. Steuereinrichtung nach einem der vorhergehenden Ansprüche, **dadurch gekennzeichnet, dass** Mittel zum Umsetzen der mechanischen Auslenkung des Stellhebels (1) beziehungsweise der Schwinge (12) in elektrisch auswertbare Signale vorgesehen sind.

8. Steuereinrichtung nach einem der vorhergehenden Ansprüche, **dadurch gekennzeichnet, dass** die Kulisse (19) wenigstens eine Führungsebene (20) zur Längsführung und zumindest eine Bohrung (22) zur Arretierung des Stellhebels (1) aufweist.

## Revendications

1. Dispositif de commande, notamment pour véhicule agricole ou de travaux publics, comprenant un levier de manoeuvre (1) qui comporte une poignée (4) et qui est disposé dans un boîtier, une console (9) ou analogue de façon à pouvoir être changé d'orientation suivant au moins une direction et est guidé au moyen d'une coulisse (19), la coulisse (19) étant associée à l'extrémité du levier de manoeuvre (1) située à l'opposé de la poignée (4) et la coulisse (19) comportant au moins un plan de guidage et un plan d'immobilisation qui présentent des distances différentes vis-à-vis du point de basculement du levier de changement de vitesses (1), le levier de manoeuvre (1) pouvant être changé d'orientation et/ou pouvant être immobilisé en fonction de la coulisse (19) et le levier de manoeuvre (1) pouvant être introduit dans un montage à palier dans une bielle oscillante (12) qui est montée dans la console (9) et peut faire l'objet d'un basculement transversalement à la direction de basculement du levier de manoeuvre (1), **caractérisé en ce que** la bielle oscillante (12) comporte, disposé de façon à pouvoir tourner transversalement vis-à-vis de la direction de basculement de celle-ci, un axe (26) présentant un alésage (27) recevant le levier de manoeuvre (1) et le levier de manoeuvre (1) comporte des griffes (28) dans la zone du point de basculement, les griffes (28) entourant au moins partiellement l'axe (26) lorsque le levier de manoeuvre (1) est introduit dans l'alésage (27).

2. Dispositif de commande suivant la revendication 1, **caractérisé en ce que** le levier de manoeuvre (1) pouvant basculer suivant une direction X peut basculer dans la bielle oscillante (12), transversalement à cette direction X, suivant une direction Y.

3. Dispositif de commande suivant l'une des revendications précédentes, **caractérisé en ce que** le montage à palier (23) de la bielle oscillante (12) comprend des tourillons de palier (8), tandis que, dans un élément de support (10, 11) de la console (9), il est prévu des fentes longitudinales (29) auxquelles se raccorde un alésage (30) plus grand en diamètre que les tourillons de palier (8) et que des manchons (31) peuvent être enfilés par-dessus les tourillons de palier (8).

4. Dispositif de commande suivant la revendication 3, **caractérisé en ce que** le manchon (31) est immobilisé au moyen d'un anneau élastique ou d'une broche ou goupille ou analogue.

5. Dispositif de commande suivant l'une des revendications précédentes, **caractérisé en ce que** sont associés au levier de manoeuvre (1) et/ou à la bielle oscillante (12) des éléments de transmission (13, 14) qui transforment un changement d'orientation en un déplacement suivant la direction du changement d'orientation et/ou transversalement au changement d'orientation.

6. Dispositif de commande suivant la revendication 5, **caractérisé en ce que** les éléments de transmission (13, 14) transmettent le changement d'orientation à des câbles Bowden (15, 17), barres de poussée (24, 25) ou analogues.

7. Dispositif de commande suivant l'une des revendications précédentes, **caractérisé en ce qu'**il est prévu des moyens servant à transformer le changement d'orientation mécanique du levier de manoeuvre (1) ou de la bielle oscillante (12) en signaux exploitables électriques.

8. Dispositif de commande suivant l'une des revendications précédentes, **caractérisé en ce que** la coulisse (19) comporte au moins un plan de guidage (20) servant au guidage longitudinal et au moins un trou (22) servant à l'immobilisation du levier de manoeuvre (1).

## Claims

1. A control device, in particular for agricultural or construction vehicles, having an operating handle (1) comprising a knob (4), which is deflectably disposed in a housing, a control panel (9) or the like in at least one direction and is guided by means of a shifting gate (19), with the shifting gate (19) being associated with the end of the operating handle (1) opposite the knob (4), and the shifting gate (19) comprising at least one guide plane and one stopping plane, which have different spacings from the swivel point of the operating handle (1), where the operating handle (1) can deflect and/or can be fixed in dependence on the shifting gate (19) and the operating handle (1) can be inserted into a bearing in a rocker (12) that is mounted in the control panel (9) and can swivel at right angles to the swivel direction of the operating handle (1),
**characterised in that** the rocker (12) comprises a bolt (26) rotatably disposed at right angles to its swivelling direction with a bore (27) receiving the operating handle (1) and in the region of the swivel point the operating handle (1) comprises claws (28), the claws (28) at least to some extent engaging around the bolt (26) when the operating handle (1) is inserted into the bore (27).

2. A control device according to Claim 1,
**characterised in that** the operating handle (1), that can swivel in a direction X, can swivel in the rocker (12) in a direction Y at right angles to this direction X.

3. A control device according to one of the preceding Claims,
**characterised in that** the bearing (23) of the rocker (12) comprises bearing journals (8), wherein in a bearing element (10, 11) of the control panel (9) longitudinal slots (29) are provided with a connecting bore (30) having a larger diameter than the bearing journals (8) and sleeves (31) can be slid onto the bearing journals (8).

4. A control device according to Claim 3,
**characterised in that** the sleeve (31) is secured by means of a spring washer or a pin or split pin or the like.

5. A control device according to one of the preceding Claims,
**characterised in that** transmission elements (13, 15), which transmit an excursion into a movement in the direction of the excursion and/or at right angles to the excursion, are associated with the operating handle (1) and/or the rocker (12).

6. A control device according to Claim 5,
**characterised in that** the transmission elements (13, 14) transmit the excursion to Bowden wires (15, 17), connecting rods (24, 25) or the like.

7. A control device according to one of the preceding Claims,
**characterised in that** means are provided for converting the mechanical excursion of the operating handle (1) or of the rocker (12) into signals that can be electrically evaluated.

8. A control device according to one of the preceding Claims,
**characterised in that** the shifting gate (19) comprises at least one guide plane (20) for the longitudinal guidance and at least one bore (22) for stopping the operating handle (1).
